(19) Europäisches Patentamt
European Patent Office
Office européen des brevets

(11) **EP 1 603 262 B1**

(12) **EUROPEAN PATENT SPECIFICATION**

(45) Date of publication and mention
of the grant of the patent:
**17.01.2007 Bulletin 2007/03**

(51) Int Cl.:
**H04L 1/00** (2006.01)

(21) Application number: **04291360.8**

(22) Date of filing: **28.05.2004**

(54) **Multi-rate speech codec adaptation method**

Anpassungsverfahren für ein Mehrraten-Sprach-Codec

Procédé d'adaptation d'un codec vocal à plusieurs débits

(84) Designated Contracting States:
**AT BE BG CH CY CZ DE DK EE ES FI FR GB GR
HU IE IT LI LU MC NL PL PT RO SE SI SK TR**

(43) Date of publication of application:
**07.12.2005 Bulletin 2005/49**

(73) Proprietor: **ALCATEL
75008 Paris (FR)**

(72) Inventor: **Gerlach, Christian Georg
71254 Ditzingen (DE)**

(74) Representative: **Rausch, Gabriele et al
Alcatel
Intellectual Property Department, Stuttgart
70430 Stuttgart (DE)**

(56) References cited:
**WO-A-02/30098**

• **3GPP TS 45.009 V6.1.0; TECHNICAL
SPECIFICATION GROUP GSM/EDGE; RADIO
ACCESS NETWORK: "Link adaptation"[Online]
February 2004 (2004-02), pages 1-24,
XP002305079 Retrieved from the Internet: URL:
http://www.3gpp.org/ftp/Specs/archive/
45_series/45.009/> [retrieved on 2004-11-10]**

**Description**

**Field of the Invention:**

The invention relates to a method for codec mode adaptation of adaptive multi-rate codecs regarding speech quality. In more detail, the invention relates to a method of codec mode adaptation for switching of a speech codec, in particular a GSM or UMTS multi-rate codec (AMR), in dependency of the prevailing channel condition for transmission of speech frames in a telecommunication system.

**Background of the Invention:**

In a telecommunication system for digital voice transmission, e.g. a digital mobile radio system like GSM or UMTS speech signals to and from a mobile station are speech encoded and channel encoded before transmitted digitally over the disturbed mobile radio channel. Recently speech and channel codecs in telecommunication systems are provided to have multiple modes. For example, the adaptive multi-rate narrow band (AMR-NB) codec standardized by 3GPP has 8 modes(4,75; 5,15; 5,90; 6,70; 7,40; 7,95; 10,2 and 12,2 kbit/s) of source bit rate. All bit rates can be used e.g. in GSM full-rate channel with 22,8 kbit/s capacity.

The difference between source and channel bit rate is fed up with bits used for channel error protection. That means, that for a lower rate mode more channel error protection is used which makes the transmission more robust in bad channel conditions. The reason for adapting such a variable rate scheme is to adapt the necessary compression (or source rate mode) to the prevailing channel condition in a way that error free channel decoding is already possible, but the compression is not too strong to loose achievable speech quality.

In GSM recommendation 05.09 or 3GPP rec. TS45.009 respectively, a solution is disclosed on how to get the switching or adaptation decision based on an estimated carrier to interferer ratio (C/I) that are estimated in the base station (BTS) for each received data burst. The C/I values describe the disturbance of each received data burst. They vary in the time and are a measure for the current channel quality. After smoothing the C/I values with a linear filter a list of one to three switching thresholds and a hysteresis is used for the switching/adaptation decision of the codec mode. The switching decision between the modes is based on the carrier-to-interference ratio C/I measured or estimated at the respective receiver. The smoothing of the C/I values means that a mean C/I value is calculated. Furthermore, this averaging over a huge number of C/I values results in a slow reaction of the codec mode adaptation decision. Thus, if the channel falls in a bad channel condition this mechanism can be too slow for reaction and due to the "misselected" mode a long row of speech frames are muted thereby degrading said speech quality.

Further, the estimation of a mean C/I value by smoothing the C/I values is disadvantageous. Thus, for example a channel with a mean C/I value of 5 dB and a high variation of C/I values of -5 dB to +15 dB and a channel with the same mean C/I value, but a small variation of C/I values, say from +2 dB to +8 dB, will give the same C/I-mean value or codec mode adaptation decision after averaging with a linear smoothing filter. In other words: the decision algorithm mentioned above results in the same codec mode for both channel conditions which is certainly not adequate.

**Summary of the Invention:**

It is therefore an object of the present invention to provide a method, a mobile terminal, and a base station for codec mode adaptation of an adaptive multi-rate codec in dependency of the prevailing channel condition for transmission of speech frames, which enables a more efficient codec mode decision regarding the speech quality of a speech channel.

This object is achieved by a method according to claim 1 a mobile terminal according to claim 11, and a base station according to claim 12.

The invention recognizes, that the local minimum values of the channel quality value speech frame curve are indeed relevant for the speech quality. With other words: all the peaks in negative direction of a channel quality value curve are relevant since these lead to lost frames in the speech decoder. A channel quality value is for example the carrier-to-interferer ratio (C/I) in a speech transmission system like GSM. In contrast, the filtering of C/I values of the state of the art only gives an average C/I value for a plurality of consecutive speech frames, and thus high C/I values of speech frames are overvalued since the transmission can not become more than error free.

In other speech transmission systems e.g. IS-95 or UMTS variable rate speech codecs are also employed. Channel quality can also be given by various measures such as channel decoder metrics or estimated C/I or number of channel (raw) bit errors or receive code power and maybe thus generally denoted as channel quality indicator or channel quality value.

According to an alternative embodiment of the invention a codec mode adaptation decision is made by: determining a bit error rate (BER) from a channel quality value, e.g. a carrier-to-interferer ratio (C/I), per data burst, generating a frame bit error rate value of a speech frame from a plurality of consecutive data bursts, generating an ordered list of frame bit error rate values for a plurality of speech frames, determining a critical bit error rate level for the plurality of speech frames based on a maximum operation of the frame bit error rate values of the plurality of speech frames or a sorting and selecting operation of the frame bit error rate values of the plurality of speech frames, controlling a codec mode adaptation based on the critical bit error rate level.

The determining of a bit error rate (BER) from a channel quality value like C/I is for example made with a calibration curve generated with representative test data or predetermined test pattern or by an estimation. The generating of a frame BER value is preferable made by an estimation or an averaging of the BER values of consecutive data bursts. This is in particular sufficient, if a codec mode switching decision is made for speech frames and not for individual data bursts, which is a practical approach.

As mentioned before, the filtering of C/I values of the state of the art only gives an average C/I value for a plurality of consecutive speech frames, and thus high C/I values of speech frames are overvalued since the transmission can not become more than error free.

The carrier-to-interferer ratio could be measured or estimated. The carrier-to-interferer ratio (C/I) is a logarithmic scale. According to the invention it is realised that the C/I in general is not well suitable for monitoring small deviations.

Furthermore, the local maximum values of a frame averaged bit error rate corresponds to local minimum values of a C/I speech frame curve and are relevant for the speech quality. With other words: all the positive peaks of the BER values are relevant since these lead to lost frames in the speech decoder. According to the invention a critical bit error rate level is determined by a (sizewise) sorting or maximum operation of frame BER values. The solution according to the invention is orientated towards the real speech quality. It enables in particular an enhanced codec mode adaptation for highly and small fluctuating channels. Instead of a linear filtering of C/I values of the state of the art a non-linear filtering is performed such, that local minimum values of speech channel quality are the basis for a codec mode adaptation decision.

A mobile terminal and a base station according to the invention comprises means for carrying out the method according to the invention. These means comprises in particular a program code for executing the method on a processor, e.g. a DSP, and the processor unit memory for storing the program code and data.

According to a preferred embodiment of the invention the controlling of the codec mode adaptation is made in dependency of the number of speech frames which can be handled by the error concealment of the speech codec. That means, that the critical bit error rate level is determined in dependency of the number of speech frames handled by the error concealment of the speech codec or that the second, third, fourth etc. lowest minimum of the speech frame channel quality value curve is used for controlling the codec mode adaptation.

For each codec mode there is a bit error rate level above which channel error correction is not possible anymore and due to residual bit errors such a speech frame has to be marked bad, i.e. a bad frame indication (BFI) results for this frame. The critical BER level is determined such, that at this level it is guaranteed that maybe some single speech frames are indicated as BFI and handled by an error concealment, e.g. replaced by a repetition of the previous frame, but not so many frames as would go beyond the ability of the error concealment. Thus, a codec mode is selected, not too high to create bad speech quality due to too much bad frames, but high enough to not unnecessarily reduce the speech quality a priory by high compression. If, for example, the number of allowed concealed speech frames is 2, than the 2+1 highest, i.e. the third highest bit error rate value is the critical bit error rate level for the window.

According to a further development of the invention the determining of a critical bit error rate level for a plurality of speech frames is achieved by:

- partitioning speech frame bit error rate values of speech frames, preferable consecutive speech frames, in a plurality of windows,
- sorting the speech frame bit error values of a window in a descending or ascending order, to get a list of ordered values,
- determining the number of allowed concealed speech frames, as C,
- and determining a critical bit error rate value for the window in dependency of the allowed concealed speech frames, as the C+ 1 highest bit error rate value in the list of ordered values.

The critical bit error rate value for the window is selected from the list of the sorted bit error values. For descending ordered BER values and a number of concealed frames C, the critical BER value is the C+1 ordered BER value. For a number of allowed error concealed frames of 1, for example, the critical BER value is the second highest BER value in the list of descending sorted BER values. For an error concealment number of 2, it is the third highest value and so on. Such a method according to the invention offers a simple as well as efficient way for finding the right critical BER value, i.e. the second, third, fourth etc. highest local maximum taking in consideration the number of allowed concealed frames (that can be considered as outliers), even without determining the local maximum BER value, i.e. the first (highest) local maximum.

According to a further embodiment of the invention, a total critical bit error rate level is determined from a plurality of windows, i.e. a plurality of window bit error rate values. Thereby, the codec mode adaptation decision is made in view of the speech quality from a greater number of past frames, i.e. windows. However, an further way to incorporate a greater number of past speech frames is to enlarge the length of a window.

In a preferred embodiment of the invention, the critical bit error rate values/level of the individual windows are subjected a weighting operation. Thereby a kind of "forgetting factor" is introduced emphasizing the importance of present speech channel quality but also including the speech channel quality in the past.

In a further preferred embodiment of the invention, the method is not only applied to completely filled windows, but also to windows which are partially filled with frame bit error rate values. Thus, the method is continuously executed for each frame bit error rate value, i.e. for each speech frame received in the receiver. In an advantageous manner, the critical bit error rate value, in particular the critical window BER value and the total critical BER value of a plurality of windows, are determined in dependency of the present speech frame quality or prevailing channel condition, respectively, without waiting time for filling a window.

In a preferred embodiment of the invention, the window BER value is set to the last window BER value, when the number of filled frame BER values of said window is less than or equal to the number of allowed concealed speech frames.

According to a further development of the invention, the method is applied with at least two sequences of windows which are partly overlapping with each other. For the first sequence of windows and the second sequence of windows a total bit error rate level is determined, and the total critical bit error rate level is determined by a maximum operation out of the at least two sequences of windows.

Other object and advantages of the present invention may be ascertained from a reading of the specification and appended claims in conjunction with accompanying drawing wherein:

It is to be understood that the aforementioned features and the features explained below can be used not only in the respective combinations described but also in other combinations or alone without departing from the scope of the present invention.

## Brief Description of the Drawings

Preferred embodiments of the present invention will now be described with reference to the accompanying drawings in which

Figure 1        shows schematically a known digital communication system with speech coding for voice transmission;

figure 2        shows schematically a control block diagram of a link adaptation system

figure 3:       shows an impulse response of the smoothing filter of the state of the art used for smoothing C/I values;

figure 4:       shows schematically a definition of threshold and hysteresis for codec mode adaptation from 3 GPP recommendation 45.009;

figure 5a/b:    shows fluctuating C/I values of a highly and a slightly fluctuating channel;

figure 6:       shows in a diagram an example for bit error rates per transmitted speech frame;

figure 7:       shows the partitioning of bit error rate values in windows of length L;

figure 8:       shows the partitioning of bit error rate values with two sequences of time shifted windows; and

figure 9:       shows in more detail the overlap of the two windows of figure 8.

## Detailed Description of the Invention

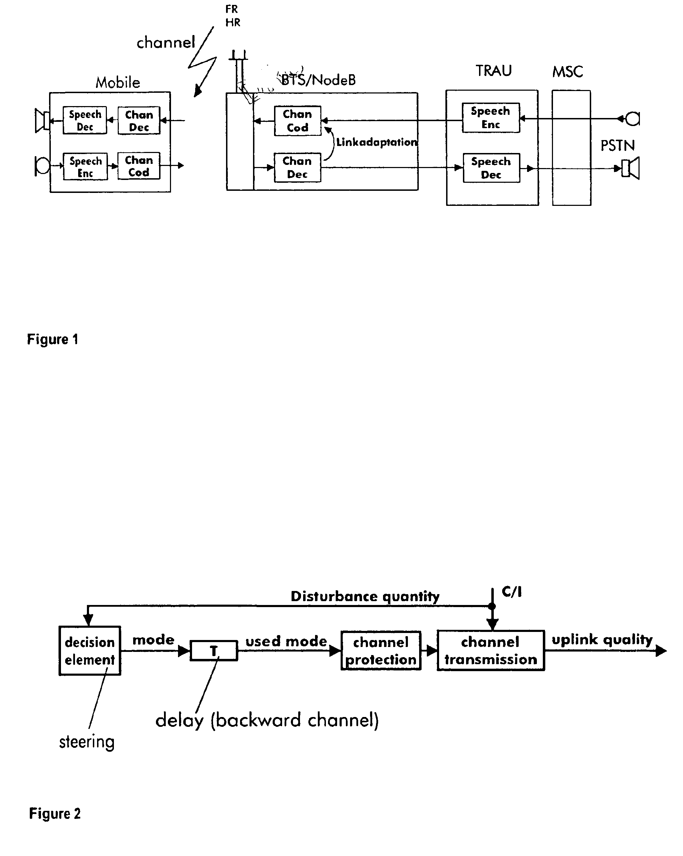

Fig. 1 shows a known digital telecommunication system. A speech signal is transmitted to and from a mobile station by using a digital telecommunication system for voice transmission over a digital mobile radio system like GSM or UMTS. The telecommunication system comprises a mobile terminal (Mobile), a base station (BTS/Node B), a transcoder and rate adapter unit (TRAU) and a mobile switching center (MSC). A Public Switched Telephone Network (PSTN) terminal is indicated by the microphone and loudspeaker symbol. The transcoder and rate adapter unit (TRAU) comprises speech encoder (speech Enc.) and speech decoder (speech Dec.). Channel Coder (Chan.Cod), and Decoder (Chan.Dec) are provided in the base station (BTS). The mobile terminal (Mobile) comprises channel coder and decoder as well as speech encoder and decoder. The speech signal is speech encoded and channel encoded before transmitted digitally over the disturbed mobile radio channel. After reception in the receiver and channel decoding, the bitstream is sent to the speech decoder to reproduce the speech signal. The quality of the speech signal from the mobile station perceived by a listener on the right side, exemplary shown as a PSTN-user, is often severely affected by disturbances on the radio channel.

The speech and channel codecs in presently developed telecommunication systems can have multiple modes. For example, the Adaptive Multi-Rate narrow band (AMR-NB) Codec standardized by 3GPP has 8 modes (4.75, 5.15, 5.90, 6.70, 7.40, 7.95, 10.2 and 12.2 kbit/s) of source bit rate. All bit rates can be used e.g. in the GSM full-rate channel with 22.8 kbit/s capacity. The difference between source and channel bit rate is filled up with bits used for channel error protection.

That means that for lower rate modes more channel error protection is used which makes the transmission more robust in bad channel conditions. Using a lower source rate mode on the other hand reduces the speech quality right from the beginning due to the higher compression factor of the voice compression. This is especially adverse for speech signals with much background noise.

The reason for adopting such a variable rate scheme is thus to adapt the necessary compression (or source rate mode) to the prevailing channel condition in a way that error free channel decoding is already possible but the compression is not to strong to lose achievable speech quality.

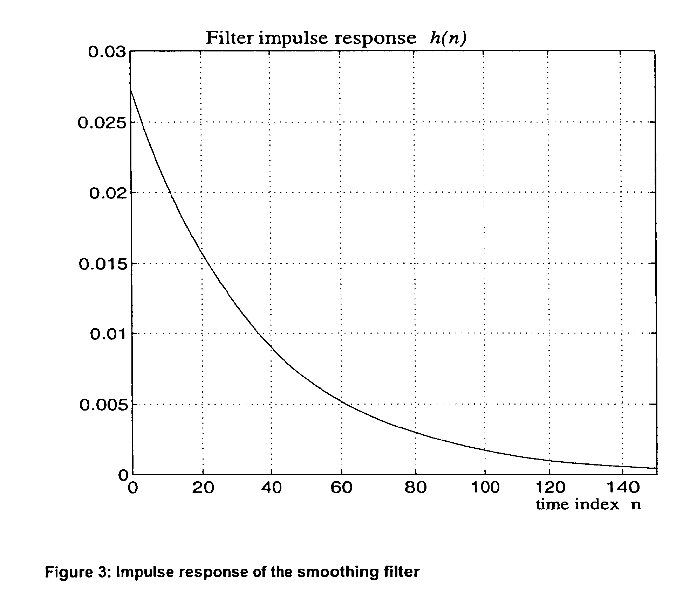

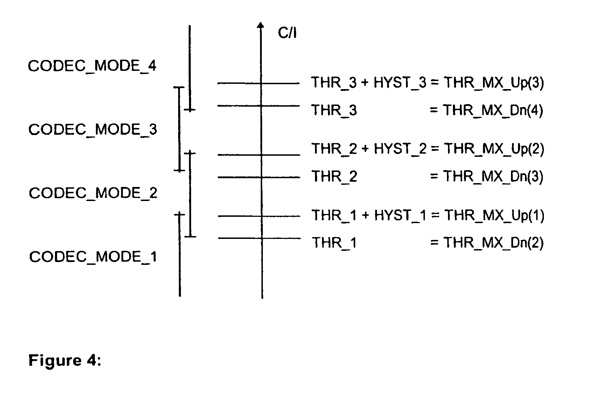

In order to measure reception quality and to give the sending station the information about the optimum codec mode, a two-way signaling scheme is used where the backward channel is used to carry the information about the desired codec mode for the sending direction. This information is denoted for the direction from a Base Station to a mobile station as codec mode command (CMC) and for the direction from mobile station to Base Station as codec mode request (CMR). For the uplink direction this algorithm is located in the Base Station whereas for the downlink direction the respective algorithm is located in the mobile station. Drawing a signal block diagram for the system will give a picture as shown in fig. 2 depicted for the uplink. The decision element sits in the Base Station and the new codec mode command is sent downlink via the backward channel. Codec mode selection is done from a set of codec modes (ACS, Active Codec Set), which may for example comprise 1 to 4 AMR codec modes. A state of the art solution is described in GSM recommendation 05.09 or 3GPP rec. TS 45.009 respectively. A solution is given on how to get the switching decision based on estimated Carrier to Interferer ratios (C/I) that are estimated in the Base Station (BTS) for each received data burst. The C/I value describes the disturbance of each received data burst and is a measure for the current channel quality. After smoothing the C/I values (see figure 3) a list of 1 to 3 switching thresholds and hysteresis (see figure 4) is used by the uplink mode control unit to generate the Codec Mode Commands. Signaling of the mode coming out from this decision process is done in the backward channel.

Figure 3 shows an example of an impulse response of a filter for smoothing the C/I values. According to the solution from the 3GPP recommendation the C/I-values per transmission burst are smoothed by an FIR-Filter which has 101 taps in case of the FR channel. The impulse response is roughly a decaying exponential function slightly shifted to the negative amplitudes. The output of this smoothing filter located in the decision element is the estimated C/I-value and taken as C/I-norm(n) which is used as quality indicator. With this C/I-norm value a decision on the mode is taken every 20 ms frame in the decision element. The decision is based on a simple threshold comparison with hysteresis as shown in Fig. 4 from 3GPP specification 45.009 with C/I drawn on the vertical axis.

The method according 3GPP has the drawback, that the averaging over C/I values results in a slow (0.5 s) reaction of the decision elements. So if the channel falls in a bad channel condition this mechanism can be too slow for reaction and due to the "misselected" mode a long row of speech frames are muted degrading the speech quality. A further drawback is the concentrating of this method on mean C/I values.

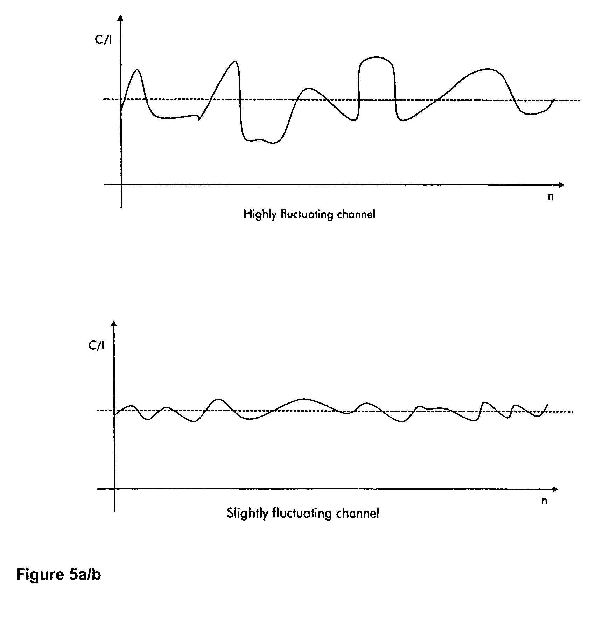

Figure 5 shows schematically two channels, one that is highly fluctuating and one that is only slightly fluctuating. The above filtering will only estimate a mean C/I. So a channel with a mean value of C/I-mean = 5 dB and a high variation of C/I-values of say-5dB to +15dB and a channel with the same mean value but a small variation of C/I say from +2 to +8 dB will give the same C/I-norm of 5 dB after averaging with a normal linear smoothing filter.

In other words: the known decision algorithms result in the same codec mode for both. Now for the first channel this could mean that the bursts with low C/I values result in muted speech frames while this does not occur for the second.

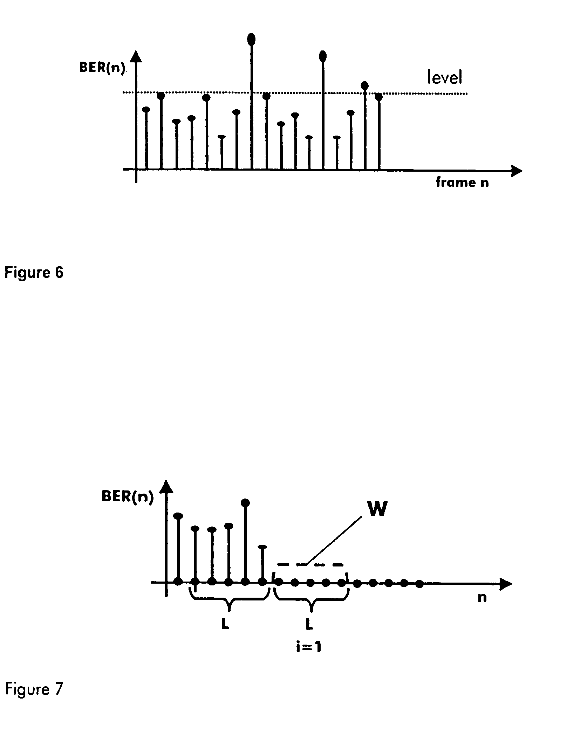

Following, embodiments of the invention will be described with reference to figures 6 to 8.

According to the invention, an adaptation algorithm is provided, based on the measured channel quality, which overcomes above mentioned drawbacks and is oriented to improve the speech quality.

The invention realised that high C/I values in general will compensate low C/I values in a linear smoothing which does not translate to the speech quality.

The invention comprises an algorithm/method that is oriented towards the local minimum values of channel quality or local maximum values of channel bit error rate (BER) and uses these values as input for decisions.

Speech is e.g. digital transmitted in speech frames via transmission bursts carrying the transmitted bits of a speech frame. This is realized for example for a GSM FR channel such, that one speech frame with 456 bits is distributed by a interleaving function over 8 adjacent data bursts. The bit error rate in these data bursts will determine the channel bit errors for the transmitted 456 channel bits. The bit error rate per burst can be estimated from the C/I per burst. By averaging over the relevant data bursts belonging to a frame the bit error rate for each speech frame can be obtained and also depicted over the time axis.

For each codec mode there is a certain bit error rate following called BER_oper, above which channel error correction is not possible anymore and due to bit errors, in particular residual bit errors in class 1a bits, the frame has to be marked bad so that a bad frame indication (BFI) results for this frame. The BER_oper is higher the lower the codec mode and the more powerful the channel codec is. So looking at peaks in negative directions of the C/I-curve hints where the problems for speech quality are. Expressing it reverse: after obtaining the relevant bit error rate (BER) per speech frame the positive peaks or high BER values create the problems. Depending on the error concealment abilities of the speech codec a certain number of such peaks can be compensated by the error concealment.

Figure 6 shows a diagram of bit error rate (BER) values over the frame number of Speech frames (frame n).

Usually one peak of a BER value above BER_oper is not sufficient to create a problem because if it results in a bad frame indication (BFI) error concealment in the speech decoder takes place which repeats the previous set of speech parameters. If the next frame after that is also a BFI frame then, depending on the error concealment abilities, already muting of the speech output signal could occur and a user starts to listen effects.

Turning back to the BER curve of Fig. 6 one has to find a critical BER level following called BER_crit such low that, if values lie above it, the neighboring values are not also above it, as indicated in figure 6 by the dotted line (level). If with this level a mode is selected with BER_oper just above the level, it is guaranteed that maybe some single frames are BFI signaled and replaced by a repetition of the previous frame but not multiple frames after the other are bad frame indicated and muted.

The determined level value BER_crit is the value to be used for mode switching to select the highest mode possible still with BER_oper > BER_crit. Thus, a mode not too high to create bad speech quality due to too much bad frames, but high enough to not unnecessarily reduce the speech quality *a priori* by high compression.

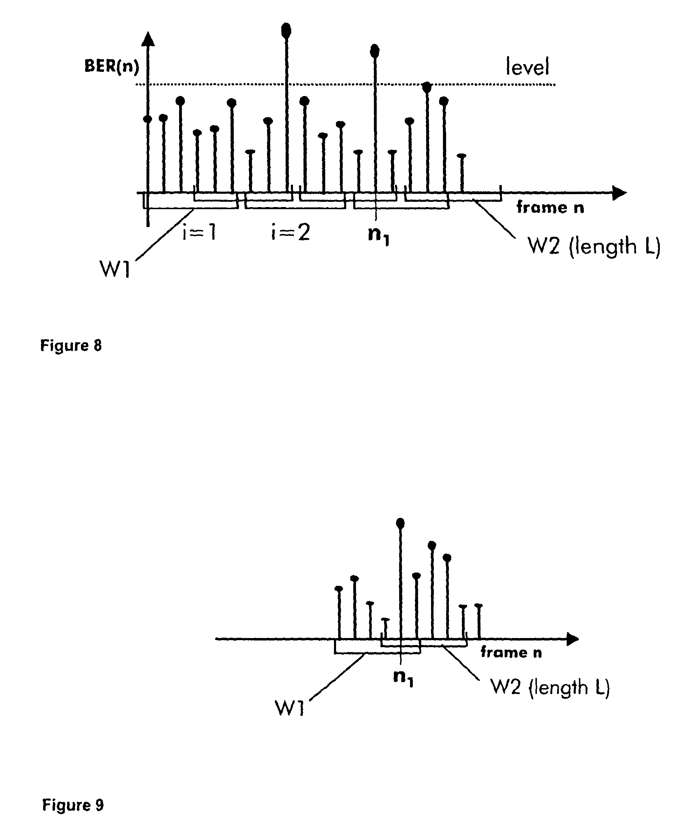

Following with reference to figure 7 a first embodiment of the invention is described, explaining how to derive and predict a level value BER_crit from the calculated BER(n) values.

The BER values or the time line denoted by index n, respectively, are first partitioned in intervals or windows W of Length *L.*

Inside the window W the relative time index is then denoted *m*. Thus the i-th row of BER values is then denoted BERW(i, m) with

$$\mathrm{BERW}(i,m) = \mathrm{BER}(\overbrace{i \cdot L + m}^{n}) \quad \text{for } m = 0, 1, \ldots, L-1$$

The values in the window i before and including the index m are sorted preferable in descending order, which gives for each time index m

$$
\begin{array}{c}
^{1}\mathrm{BERW}(i,m) \\
^{2}\mathrm{BERW}(i,m) \\
\vdots \\
^{C+1}\mathrm{BERW}(i,m)
\end{array}
$$

with $^{1}\mathrm{BERW}(i,m)$ denoting the so far maximum value, $^{2}\mathrm{BERW}(i,m)$ the second highest value and $^{c+1}\mathrm{BERW}(i,m)$ the C+1 highest value in general. The index m must be big enough to provide all values i.e. $C \leq m < L.$

The critical level to allow C concealed frames is $\mathrm{BERW\_crit}(i,m) = {}^{C+1}\mathrm{BERW}(i,m)$ since only C frames have higher BER-values as this.

If one allows only C=1 frame to be concealed the critical level is given by

$$\mathrm{BERW\_crit}(i,m) = {}^{2}\mathrm{BERW}(i,m) \text{ if } m \geq 1. \text{ (Eq. 1.)}$$

So the second highest value out of the window gives the critical level.

It goes without saying, that a similar method is applicable, it the values are sorted in an ascending order.

Now for C=1 far initialization at m=0 the critical level is set to the last critical value from the preceding window.

$$BERW\_crit(i,0) = BERW\_crit(i-1, L-1).$$

So for each $m \in 0, 1, ..., L$-1 the level BERW_crit($i,m$) is defined and is computed. It is the current value that is computed with each new speech frame or time instance n. The value for the whole window $i$ is then denoted just BERW_crit($i$) and given by

$$BERW\_crit(i) = BERW\_crit(i, L-1) \quad \text{for each } i \in Z. \text{ (Eq. 2.)}$$

To incorporate also prediction from past frames i.e. windows, finally the total level is defined by a maximum operation as:

$$BERW\_crit\_total(n) = Max\left\{ \frac{1}{\sum_{j=1}^{\infty} \alpha^{j-1}} \sum_{j=1}^{\infty} \alpha^{j-1} \cdot BERW\_crit(i-j) , BERW\_crit(i, n-iL) \right\}$$

with $i$ = integer[$n / L$]

The forgetting factor $\alpha$ is chosen as $\alpha < 1$. This gives the desired total critical level for each time index n.

Using this simple solution it may seldom happen that the maximum of one window lies at the end and the maximum of the next window at its beginning. These frames would be bad frame signaled so that more than one frame in a row is error concealed. In order to prevent this possibility a more sophisticated solution with two time shifted sets of windows is later described as a second embodiment of the invention. There it can be shown that error concealed frames are guaranteed to lie at least L/2+1 frames apart.

Since these effects are seldom the simple solution from above is mostly considered sufficient and will give the right critical level for decision.

A generalization of the solution to $C \neq 1$ but $C = 2$ or 3 concealed frames allowed in a row is easily done by setting $C = 2$ or 3 in the formulas above.

In order to implement this method according to the invention only approx. 5 to 6 additional permanent storage locations in memory are needed per channel. The method provide a BER level which is the right to be used for mode decisions. After possibly adding a security distance (or using a security factor) the BER level can be converted back into a C/I ratio or directly used for a threshold decision similar to the smoothed C/I values of the 3 GPP recommendation. So still the old threshold decision mechanism with hysteresis could be used further.

Following, with reference to figures 8 and 9, a second embodiment of the invention is described, which is a more sophisticated method for finding the critical BER level value BER_crit using two sequences of windows to keep concealed frames always a minimum distance apart.

In order to simplify the presentation of the principle of the two sequences of windows, a prediction from the past frames, i.e. windows, as described for the first embodiment of the invention is omitted in the following description for the second embodiment.

A finite time signal BER(n) is assumed known for all points for which the critical level BER_crit shall be determined. For this, two sequences of windows W1 (i) and W2(i) of length L are used. L is assumed even and the sequences are time shifted by L/2 as depicted in figure 8 for L = 6.

The method for determining the critical level BERW1_crit($i$) or BERW2_crit($i$) for each window W1 (i) or W2(i) is described in equation Eq.1 and equation Eq.2 of the first embodiment of the invention. So the total level for the first sequence of windows W1 (i) shall be defined by

$$BERW1\_crit = Max_i\left\{ BERW1\_crit(i) \right\}$$

and for the second sequence by

$$BERW2\_crit = \underset{j}{Max}\left\{\ BERW2\_crit(j)\ \right\}.$$

For determining the level value BER_crit for the mode switching decision, i.e. the total level regarding the two windows, a maximum operation out of the two sequences as given by

$$BER\_crit\_total = Max\left\{BERW1\_crit,\ BERW2\_crit\right\}.$$

is derived.

It should be noted , that this method could furthermore comprises a prediction as shown and described in connection with the first embodiment.

Following it is shown, that error concealed frames are guaranteed to lie at least L/2+1 frames apart, if a method according to the second embodiment of the invention, two time shifted sets of windows, is used.

With reference to figure 8, it is assume without loss of generality that a concealed frame in window W1 (i) lies at the time index $n_1$. Further the index $n_1$ belongs to W1 (i) and to W2(j).

Thus $BER(n_1) > BER\_crit\_total \geq BERW1\_crit(i) \geq BERW1(i, n \neq n_1)$ and $BER(n_1) > BER\_crit\_total \geq BERW2\_crit(j) \geq BERW2(j, n \neq n_1)$.

So the critical level is that high that inside window W1 (i) and inside window W2(j) there can not be another concealed frame. Only outside there can be the next concealed frame.

So $n_1$ lies in the overlap region of W1 and W2 of a first and a second window of size L as depicted in figure 8 and sketched in figure 9.

Thus one can easily see that the minimum distance to values outside $W_1 \cup W_2$ is when $n_1$ is either at the edge of W1 or at the edge of W2 for which the distance is then roughly a half window length or exactly $\dfrac{L}{2}+1$.

This is the minimum distance to the next concealed frame.

As one can see now a generalization to three or four sequences of third or fourth window length time shifted windows is easily possible. This would achieve that the minimum distance in bad cases is even increased to almost L.

Following, advantages and further developments of the method according to the invention are summarized.

It is achieved now that independent of the mean C/I or the fluctuation of the channel the second highest BER values or second lowest channel quality value determine the mode decision. These values describing a more relevant measure to get optimum speech quality.

Furthermore, the parameters of window length L, possibly comprising a security distances to compensate for C/I → BER inaccuracy, could be adapted, for example based on characteristic channel measurements.

During Discontinuous Transmission (DTX) there is no speech transmission but only SID-update frames every 8th frame. Such an SID-frame can still be used to calculate an BER-value for this frame. So for C=1 this value will be repeated for one time in the affected window. Then the method can go on as described before.

The improvement potential by the method according to the invention is especially high for dynamic channels with quickly changing C/I-levels. Since due to the maximum operation in getting the final value per frame it adjusts immediately to two bad channel BER values that come in. Thus it provides optimum speech quality for any channel and any state. Furthermore, there is no problem with different variances of channel quality (C/I-fluctuation) of different channels e.g. velocity 3 km/h or 50 km/h. These do not need different adjustments or thresholds but the same threshold based on speech quality apply for any channel. Thus, there is no tuning by the network provider to cell or channel situation necessary any more. The method provides on the whole a maintenance free or low maintenance solution.

**Claims**

1. Method for speech codec mode adaptation of an adaptive multi-rate codec in dependency of the prevailing channel condition for transmission of speech frames in a telecommunication system, each of said speech frames being subject to a speech coding step followed by a channel coding step said method comprising the steps of:

- determining channel quality values for a plurality of received speech frames,

**characterised in that** said method further comprises the steps of : excluding a predefined number of worst channel quality values, from said determined channel quality values depending on the number of speech frames which can be handled by the error concealment of said speech coding step;

- determining the minimum from said remaining channel quality values of the speech frames,
- controlling said speech codec mode based on said determined minimum.

2. Method according to claim 1, wherein said step of determining channel quality values for a plurality of speech frames comprises the steps of:

- determining a bit error rate from a channel quality value per data burst,
- generating a frame bit error rate value of a speech frame from a plurality of consecutive data bursts, and said step of determining a minimum from said remaining channel quality values of the speech frames comprises the step of:

- determining a critical bit error rate level for the plurality of speech frames based on
- a sorting and selecting operation of the frame bit error rate values of the plurality of speech frames.

3. Method according to claim 2, **characterised in that,** the sorting and selecting operation comprises the steps of:

- generating an ordered list of frame bit error rate values for a plurality of speech frames,
- determining a critical bit error rate level for the plurality of speech frames based on a selecting of a frame bit error rate value of a certain position in the ordered list, said position depending on the error correction capacity of said used channel coding.

4. Method according to one of the claims 1 to 3, **characterised in that**, the channel quality value is the carrier-to-interference ratio.

5. Method according to one of the claims 2 to 4, **characterised in that**, the step of determining a critical bit error rate level for a plurality of speech frames comprises the steps of:

- partitioning bit error rate values of speech frames in a plurality of windows comprising predetermined numbers of bit error rate values
- sorting the bit error rate values of a window in a descending or ascending order to get a list of ordered bit error rate values
- determining the number of allowed concealed speech frames as C
- determining the critical bit error rate level for the window as the C+ 1 highest bit error rate value in the list of ordered values.

6. Method according to claim 5, **characterised in that**, the method comprises the further step:

determining a total critical value bit error rate from a plurality of critical bit error rate values of windows.

7. Method according to claim 6, **characterised in that**, the step of determining a total critical value bit error rate of a plurality of windows comprises the step of:

- weighting the critical values bit error rote values of the individual windows.

8. Method according to one of the claims 5 to 7, **characterised in that**, the method is not only applied to completely filled windows but also to windows which are partially filled with frame bit error rate values.

9. Method according to one of the claims 5 to 8, **characterised in that,** the window bit error rate value is set to the last window bit error rate value, if the number of filled frame bit error rate values of said window is less than or equal to the number of allowed concealed speech frames.

10. Method according to one of the claims 5 to 9, **characterised by** using at least two sequences of windows which are partly overlapping with each other, wherein

- a total level for the first sequence of windows and the second sequence of windows is determined, and
- the total critical bit error rate level is determined by the maximum of the total level for the first sequence and for the second sequence.

11. Mobile terminal for speech codec mode adaptation of an adaptive multi-rate codec in dependency of the prevailing channel condition for transmission of speech frames in a telecommunication system, each of said speech frames being subject to a speech coding step followed by a channel coding step, the mobile terminal comprises means for:

- determining channel quality values for a plurality of received speech frames,

**characterised in that** said mobile terminal has further means for: excluding a predefined number of worst channel quality values from said determined channel quality values depending on the number of speech frames which can be handled by the error concealment of said speech coding step;

- determining minimum from said remaining channel quality values of the speech frames,
- controlling said speech codec mode based on said determined minimum.

12. Base station for speech codec mode adaptation of an adaptive multi-rate codec in dependency of the prevailing channel condition for transmission of speech frames in a telecommunication system, each of said speech frames being subject to a speech coding step followed by a channel coding step the base station comprises means for:

determining channel quality values for a plurality of received speech frames,

**characterised in that** said base station has further means for: excluding a predefined number of worst channel quality values from said determined channel quality values depending on the number of speech frames which can be handled by the error concealment of said speech coding step:

- determining the minimum from said remaining channel quality values of the speech frames,
- controlling said speech codec mode based on said determined minimum.

**Patentansprüche**

1. Verfahren zur Sprach-Codec-Modus-Anpassung eines adaptiven Mehrraten-Codecs in Abhängigkeit vom vorherrschenden Kanalzustand für die Übertragung von Sprachframes in einem Telekommunikationssystem, wobei jeder der Sprachframes einem Schritt der Sprachcodierung unterzogen wird, gefolgt durch einen Schritt der Kanalcodierung, wobei das Verfahren die Schritte umfaßt:

- Ermitteln der Kanalqualitätswerte für eine Mehrzahl von empfangenen Sprachframes, **gekennzeichnet dadurch, daß** das Verfahren außerdem die Schritte umfaßt:

Ausschließen einer vorgegebenen Anzahl von schlechtesten Kanalqualitätswerten aus den ermittelten Kanalqualitätswerten in Abhängigkeit von der Anzahl der Sprachframes, die durch die Fehlerverdeckung des Schrittes der Sprachcodierung behandelt werden können;

- Ermitteln des kleinsten der übriggebliebenen Kanalqualitätswerte der Sprachframes,
- Steuern des Sprache-Codec-Modus auf der Basis des ermittelten lokalen Minimums.

2. Verfahren nach Anspruch 1, wobei der Schritt des Ermittelns der Kanalqualitätswerte für eine Mehrzahl von Sprachframes die Schritte umfaßt:

- Ermitteln einer Bitfehlerrate aus einem Kanalqualitätswert pro Datenpaket,
- Erzeugen eines Wertes der Frame-Bitfehlerrate eines Sprachframes aus einer Mehrzahl von aufeinanderfolgenden Datenpaketen,

und wobei der Schritt des Ermittelns eines kleinsten aus den übriggebliebenen Kanalqualitätswerten der Sprachframes den Schritt umfaßt:

- Ermitteln eines kritischen Bitfehlerratenpegels für die Mehrzahl der Sprachframes auf der Basis
- einer Sortier- und Auswahloperation der Werte der Frame-Bitfehlerrate der Mehrzahl der Sprachframes.

3. Verfahren nach Anspruch 2, **dadurch gekennzeichnet, daß** die Sortier- und Auswahloperation die Schritte umfaßt:

- Erzeugen einer geordneten Liste von Werten der Frame-Bitfehlerrate für eine Mehrzahl von Sprachframes,
- Ermitteln eines kritischen Bitfehlerratenpegels für die Mehrzahl der Sprachframes auf der Basis einer Auswahl eines Wertes der Frame-Bitfehlerrate von einer bestimmten Position in der geordneten Liste, wobei die Position von der Fehlerkorrekturkapazität der verwendeten Kanalcodierung abhängig ist.

4. Verfahren nach einem der Ansprüche 1 bis 3, **dadurch gekennzeichnet, daß** der Kanalqualitätswert das Träger-Störleistungsverhältnis ist.

5. verfahren nach einem der Ansprüche 2 bis 4, **dadurch gekennzeichnet, daß** der Schritt des Ermittelns eines kritischen Bitfehlerratenpegels für eine Mehrzahl von Sprachframes die Schritte umfaßt:

- Aufteilen der Werte der Bitfehlerrate der Sprachframes in einer Mehrzahl von Fenstern, die eine vorgegebene Anzahl von Werten der Bitfehlerrate umfassen
- Sortieren der Werte der Bitfehlerrate eines Fensters in einer absteigenden oder aufsteigenden Reihenfolge, um eine Liste von geordneten Werten der Bitfehlerrate zu erhalten
- Ermitteln der Anzahl der zulässigen verdeckten Sprachframes als C
- Ermitteln des kritischen Bitfehlerratenpegels für das Fenster als der C + 1 höchste Wert der Bitfehlerrate in der Liste der geordneten Werte.

6. Verfahren nach Anspruch 5, **dadurch gekennzeichnet, daß** das Verfahren den weiteren Schritt umfaßt:

- Ermitteln der Bitfehlerrate eines kritischen Gesamtwertes aus einer Mehrzahl von kritischen Werten der Bitfehlerrate des Fensters.

7. Verfahren nach Anspruch 6, **dadurch gekennzeichnet, daß** der Schritt des Ermittelns der Bitfehlerrate eines kritischen Gesamtwertes von einer Mehrzahl von Fenstern den Schritt umfaßt:

- Wichten der Werte der Bitfehlerrate der kritischen Werte der einzelnen Fenster.

8. Verfahren nach einem der Ansprüche 5 bis 7, **dadurch gekennzeichnet, daß** das Verfahren nicht nur auf vollständig gefüllte Fenster angewendet wird, sondern ebenfalls auf Fenster, die mit Werten der Frame-Bitfehlerrate teilweise gefüllt sind.

9. Verfahren nach einem der Ansprüche 5 bis 8, **dadurch gekennzeichnet, daß** der Wert der Bitfehlerrate des Fensters auf den letzten Wert der Bitfehlerrate des Fensters eingestellt wird, wenn die Anzahl der gefüllten Werte der Frame-Bitfehlerrate des Fensters kleiner als oder gleich der Anzahl der zulässigen verdeckten Sprachframes ist.

10. Verfahren nach einem der Ansprüche 5 bis 9, **gekennzeichnet durch** die Verwendung von mindestens zwei Sequenzen der Fenster, die sich teilweise überlappen, wobei

- ein Gesamtpegel für die erste Sequenz der Fenster und die zweite Sequenz der Fenster ermittelt wird, und
- der kritische Gesamtbitfehlerratenpegel **durch** das Maximum des Gesamtpegels für die erste Sequenz und für die zweite Sequenz ermittelt wird.

11. Mobiles Endgerät für Sprach-Codec-Modus-Anpassung eines adaptiven Mehrraten-Codecs in Abhängigkeit von dem vorherrschenden Kanalzustand zur Übertragung von Sprachframes in einem Telekommunikationssystem, wobei jeder der Sprachframes einem Schritt der Sprachcodierung unterzogen wird, gefolgt durch einen Schritt der Kanalcodierung, wobei das mobile Endgerät Mittel umfaßt zum:

- Ermitteln von Kanalqualitätswerten für eine Mehrzahl von empfangenen Sprachframes, **dadurch gekennzeichnet, daß** das mobile Endgerät außerdem Mittel aufweist zum:

Ausschließen einer vorgegebenen Anzahl von schlechtesten kanalqualitätswerten aus den ermittelten Kanalqualitätswerten in Abhängigkeit von der Anzahl der Sprachframes, die durch die Fehlerverdeckung des Schrittes der Sprachcodierung behandelt werden können;

- Ermitteln des kleinsten von den übriggebliebenen Kanalqualitätswerten der Sprachframes,
- Steuern des Sprach-Codec-Modus auf der Basis des ermittelten Minimums.

12. Basisstation zur Sprach-Codec-Modus-Anpassung eines adaptiven Mehrraten-Codecs in Abhängigkeit von dem vorherrschenden Kanalzustand für die Übertragung von Sprachframes in einem Telekommunikationssystem, wobei jeder der Sprachframes einem Schritt der Sprachcodierung unterzogen wird, gefolgt durch einen Schritt der Kanalcodierung, wobei die Basisstation Mittel umfaßt zum;

- Ermitteln von Kanalqualitätswerten für eine Mehrzahl von empfangenen Sprachframes, **dadurch gekennzeichnet, daß** die Basisstation außerdem Mittel aufweist zum:
- Ausschließen einer vorgegebenen Anzahl von schlechtesten Kanalqualitätswerten aus den ermittelten Kanalqualitätswerten in Abhängigkeit von der Anzahl der Sprachframes, die durch die Fehlerverdeckung des Schrittes der Sprachcodierung behandelt werden können,
- Ermitteln des kleinsten von den übriggebliebenen Kanalqualitätswerten der Sprachframes,
- Steuern des Sprach-Codec-Modus auf der Basis des ermittelten Minimums.

## Revendications

1. Procédé pour l'adaptation d'un mode codec vocal d'un codec adaptatif à débit variable en fonction de l'état du canal dominant pour la transmission de trames vocales dans un systèmes de télécommunications, chacune desdites trames vocales étant soumises à une étape d'encodage vocal suivie par une étape d'encodage du canal, ledit procédé comprenant les étapes consistant à :

- déterminer des valeurs de qualité de canal pour une pluralité de trames vocales recues,

**caractérisé en ce que** ledit procédé comprend en outre les étapes consistant à :

- exclure un nombre prédéfini de valeurs les plus mauvaises de qualité de canal desdites valeurs de qualité de canal déterminées en fonction du nombre de trames vocales qui peut être traité par le masquage d'erreurs de ladite étape d'encodage vocal ;
- déterminer le minimum à partir desdites valeurs de qualité de canal restantes des trames vocales ;
- contrôler ledit mode codec vocal sur la base dudit minimum déterminé.

2. Procédé selon la revendication 1, dans lequel ladite étape consistant à détermine les valeurs de qualité de canal pour une pluralité de trames vocales comprend les étapes consistant à :

- déterminer un taux d'erreurs binaires à partir d'une valeur de qualité de canal par rafale de données ;
- générer une valeur de taux d'erreurs binaires de trame d'une trame vocale à partir d'une pluralité de rafales de données consécutives ;

et ladite étape consistant à déterminer un minimum à partir desdites valeurs de qualité de canal restaantes des trames vocales comprend l'étape consistant à :

- déterminer un niveau de taux d'erreurs binaires critique pour la pluralité de trames vocales sur la base de
- l'opération de tri et de sélection des valeurs de taux d'erreurs binaires de trame de la pluralité de trames vocales.

3. Procédé selon la revendication 2, **caractérisé en ce que** l'opération de tri et de sélection comprend les étapes consistant à :

- générer une liste ordonnée de valeurs de taux d'erreurs binaires de trame pour une pluralité de trames vocales ;
- déterminer un niveau de taux d'erreurs binaires critique pour la pluralité de trames vocales sur la base d'une sélection d'une valeur de taux d'erreurs binaires de trame d'une certaine position dans la liste ordonnée, ladite position dépendant de la capacité de masquage d'erreurs dudit encodage de canal utilisé.

**4.** Procédé selon l'une quelconque des revendications 1 à 3, **caractérisé en ce que** la valeur de qualité de canal est le rapport proteuse/brouillage.

**5.** Procédé selon l'une quelconque des revendications 2 à 4, **caractérisé en ce que** l'étape consistant à déterminer une niveau de taux d'erreurs binaires critique pour une pluralité de trames vocales comprend les étapes consistant à :

- diviser les valeurs de taux d'erreurs binaires de trame vocale en une pluralité de fenêtres comprenant des nombres prédéterminés de valeurs de taux d'erreurs binaires ;
- trier les valeurs de taux d'erreurs binaires d'une fenêtre dans un ordre décroissant ou croissant pour obtenir une liste ordonnée de valeurs de taux d'erreurs binaires ;
- déterminer le nombre de trames vocales masquées admises en tant que C ;
- déterminer le niveau de taux d'erreurs binaires critique pour la fenêtre comme étant la valeur C+1 la plus élevée de taux d'erreurs binaires dans la liste des valeurs ordonnées.

**6.** Procédé selon la revendication 5, **caractérisé en ce que** le procédé comprend l'étape supplémentaire consistant à :

- déterminer un taux d'erreurs binaires de valeur critique totale à partir d'une pluralité de fenêtres de valeurs de taux d'erreurs binaires critique.

**7.** Procédé selon la revendication 6, **caractérisé en ce que** l'étape consistant à déterminer un taux d'erreurs binaires de valeur totale critique d'une pluralité de fenêtres comprend les étapes consistant à :

- pondérer les valeurs de taux d'erreurs binaires de valeurs critiques des fenêtres individuelles.

**8.** Procédé selon l'une quelconque des revendications 5 à 7, **caractérisé en ce que** le procédé n'est pas appliquée seulement à des fenêtres entièrement remplies mais aussi à des fenêtres qui sont en partie remplies de valeurs de taux d'erreurs binaires de trame.

**9.** Procédé selon l'une quelconque des revendications 5 à 8, **caractérisé en ce que** la valeur du taux d'erreurs binaires de fenêtre est défini sur la dernière valeur de taux d'erreurs binaires de fenêtre si le nombre de valeurs de taux d'erreurs binaires de trame remplies de ladite fenêtre est inférieure ou égale au nombre de trames vocales masquées admises.

**10.** Procédé selon l'une quelconque des revendications 5 à 9, **caractérisé par** l'utilisation d'au moins deux séquences de fenêtres qui se chevauchent mutuellement en partie, dans lequel

- un niveau total pour la première séquence de fenêtres et la deuxième séquence de fenêtres est déterminé, et
- le niveau de taux d'erreurs binaires total critique est déterminé par le maximum du niveau total pour la première séquence et pour la deuxième séquence.

**11.** Terminal mobile pour l'adaptation de mode codec vocal d'un codec adaptatif à débit variable en fonction de l'état du canal dominant pour la transmission de trames vocales dans un système de télécommunications, chacune desdites trames vocales étant soumises à une étape d'encodage vocal suivie par une étape d'encodage de canal, le terminal mobile comprenant des moyens pour :

- déterminer les valeurs de qualité de canal pour une pluralité de trames vocales recues,

**caractérisé en ce que** ledit terminal mobile comprend des moyens supplémentaires pour :

- exclure un nombre prédéfini de valeurs les plus mauvaises de qualité de canal desdites valeurs de qualité de canal en fonction du nombre de trames vocales qui peut être traité par le masquage d'erreurs de ladite étape d'encodage vocal ;
- déterminer le minimum à partir desdites valeurs de qualité de canal restantes des trames vocales ;
- contrôler ledit mode codec vocal sur la base dudit minimum déterminé.

**12.** Station de base pour l'adaptation de mode codec vocal d'un codec adaptatif à débit variable en fonction de l'état du canal dominant pour la transmission de trames vocales dans un systèmes de télécommunications, chacune desdites trames vocales étant soumise à une étape d'encodage vocal suivie par une étape d'encodage du canal, ladite station de base comprenant des moyens pour :

- déterminer des valeurs de qualité de canal pour une pluralité de trames vocales reçues,

**caractérisée en ce que** ladite station de base comprend des moyens supplémentaires pour :

- exclure un nombre prédéfini de valeurs les plus mauvaises de qualité de canal desdites valeurs de qualité de canal en fonction du nombre de trames vocales qui peut être traité par le masquage d'erreurs de ladite étape d'encodage vocal ;
- déterminer le minimum à partir desdites valeurs de qualité de canal restantes des trames vocales ;
- contrôler ledit mode codec vocal sur la base dudit minimum déterminé.

FR
HR

channel

Mobile

BTS/NodeB

TRAU

MSC

| Speech Dec | Chan Dec |

| Speech Enc | Chan Cod |

| Chan Cod |

| Chan Dec |

Linkadaptation

| Speech Enc |

| Speech Dec |

PSTN

**Figure 1**

Disturbance quantity

C/I

| decision element | mode | T | used mode | channel protection | channel transmission | uplink quality |

steering

delay (backward channel)

**Figure 2**

## Filter impulse response  $h(n)$

Figure 3: Impulse response of the smoothing filter

16

Figure 4:

Highly fluctuating channel

Slightly fluctuating channel

**Figure 5a/b**

Figure 6

Figure 7

Figure 8

Figure 9